# EUROPEAN PATENT APPLICATION

(11) **EP 2 071 254 A2**
(43) Date of publication of application: **17.06.2009**
(21) Application number: 08171120.2
(22) Date of filing: 09.12.2008
(51) Int. Cl.: F24J 2/38

(54) **Photovoltaic tracking system**

(30) Priority: 10.12.2007 IT MI20070409 U
(71) Applicant: Vipiemme Solar S.r.l., 24040 Isso (Bergamo) (IT)
(72) Inventor: Volpi, Alberto, 24058 Romano di Lombardia (Bergamo) (IT)
(74) Representative: Ripamonti, Enrico

(57) **Abstract**

A tracking photovoltaic plant (1) comprises a guide member which supports a frame (3) thereto one or more photovoltaic panels (4) are constrained. The guide member is apt to adjust the position of the panels (4) in relation to the sun position. The plant (1) comprises a support (7) which can be constrained to the ground which bears the frame (3) spaced apart from the ground, so that during use the area placed below the frame (3) is freely usable.

## Description

### Field of the Invention

The present invention relates to a tracking photovoltaic plant.

### State of Art

As it is known, the sun radiates continuously electromagnetic energy which reaches the earth surface with a radiation incident to the ground equal to about 1000w/mq.

This energy can be picked up and transformed into electric energy by means of the photovoltaic technology; it exploits the property of some semiconductor materials of producing electric energy by transforming the sun incident energy, without using fossil fuel.

To this purpose, the photovoltaic plants are implemented by means of fixed panels which receive the solar energy and transform it into electric energy.

It is clear that the maximum performance is obtained when the panels are perpendicular to the direction of the sunbeams; therefore, as the photovoltaic panels are fixed, these plants have a very limited performance.

In order to overcome this drawback and increase performances, the plants have been equipped with rotating support (tracking plants) driven by actuators allowing to modify the orientation of the photovoltaic panels, by keeping them perpendicular to the sunbeams.

However, even the plants implemented in this way have some drawbacks which can resume in the large overall dimensions they request and which causes an even very high loss in the usable surface (on the ground).

The technical task the present invention proposes is then to implement a tracking photovoltaic plant allowing to eliminate the technical drawbacks complained by the known art.

Within this technical task, an object of the invention is to implement a photovoltaic plant which should be a little invasive, in the sense of limiting the surface occupied on the ground.

### Summary of the invention

The technical task, as well as these and other objects, according to the present invention are achieved by implementing a tracking photovoltaic plant according to claim 1.

Other features of the present invention are further defined in the subsequent claims.

In a particular embodiment, the plant according to the invention comprises control means arranged for controlling the first and/or the second actuator so as to temporarily arrange the frame with an orientation which reduces the plant overall dimensions in order to ease the passage of a predetermined vehicle near the plant itself, even if in case it does not maximize the collection of the solar energy.

In a particular embodiment of the plant according to the invention, the control means is arranged to control the first and/or second actuator so as to temporarily arrange the frame in a substantially horizontal position to ease the predetermined vehicle passage near the plant itself.

In a particular embodiment of the plant according to the invention, the control means is arranged to control the first and/or second actuator so as to temporarily arrange the frame in a substantially vertical position, parallel to the direction of the predetermined vehicle passage near the plant itself.

In a particular embodiment of the plant according to the invention, the guide member comprises a beam rotatably connected to the support post, the rotatably connected beam forms a substantially elongated housing containing one or more between the following members: the first actuator, the second actuator, an electric and/or electronic control unit arranged to control the first and/or the second actuator, a logical unit arranged to acquire information and/or signals coming from the wind sensor, a logical unit arranged to acquire information and/or signals coming from at least a luminosity sensor.

Additional features and advantages of the invention will result more evident from the description of a preferred, but not limiting, embodiment of the plant according to the invention, illustrated by way of example and for limitative purposes in the enclosed drawings.

### List of the Figures

Figure 1 and 2 show, respectively, a view of the plant according to a first embodiment of the invention, a top and a bottom view, respectively;
figures 3, 4, 5, 6, 7 show details of the lower portion of the plant of figure 1;
figures 8 and 9 show a guide member of the device of figure 1;
figures 10 and 11 show respectively a view inside and outside a housing bearing control actuators of a frame bearing photovoltaic panels of figure 1; and
figures 12 to 16 show a second embodiment of the plant according to the invention.
Figure 15 shows a perspective view of the plant crossbar of figures 12 to 14;
figure 16 shows a cross view of the crossbar of figure 15, according to the cross plane B-B.

### Detailed description

By referring to the mentioned figures, it is shown a tracking photovoltaic plant designated as a whole with the reference number 1.

The plant 1 comprises a guide member 2 which supports a frame 3 thereto one or more photovoltaic panels 4 are constrained. The frame 3 can have a substantially plane shape, as shown for example in the enclosed figures.

The guide member 2 is apt to adjust the position of the panels 4 in relation to the sun position.

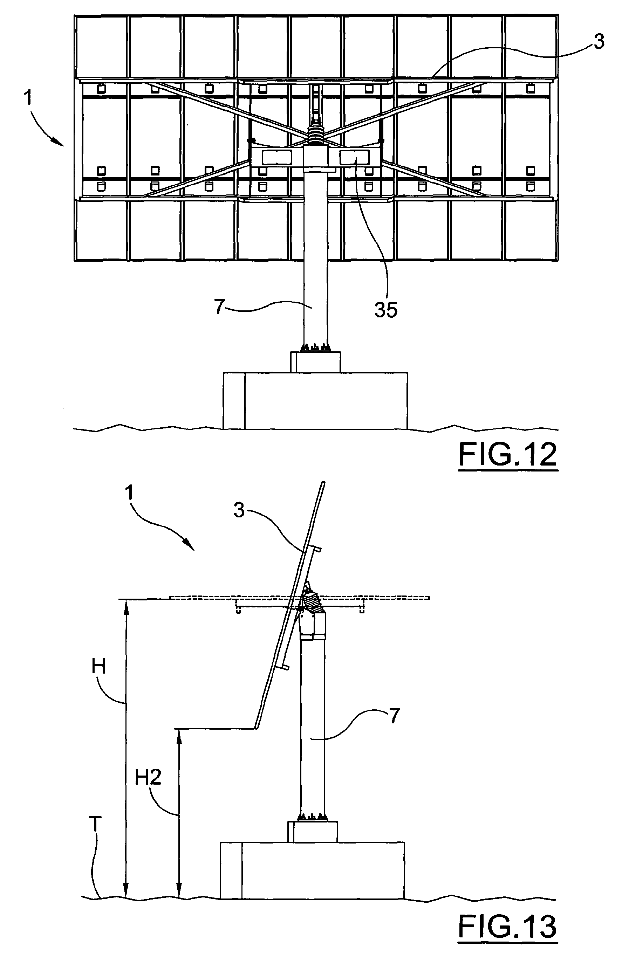

The plant 1 comprises also a support post which can be constrained to the ground (for example by means of a buried footstall); the support post 7 bears the frame 3 (and thus the panels 4) spaced apart from the ground so that, during use, the area placed below the frame 3 is freely usable. For example, the post 7 allows to keep the frame 3 (and thus the panels 4) at a distance H of about 5 metres from the ground T, for example when the frame 3 is in horizontal position (figure 13). Preferably, the sizes of the frame 3 are so that when the frame 3 is vertical, the distance H2 between the ground T and the lowest edge of the frame 3 is substantially equal or greater than 1.5 metres.

Preferably, the frame 3 has relatively big sizes, for example a length equal or greater than eight metres and a width equal or greater than five metres.

Preferably, the frame 3 has a length equal or greater than nine metres and a width equal or greater than five metres.

In a not shown embodiment, the frame 3 has a length equal about ten metres and a width equal to about five metres.

The guide member 2 bears a first actuator 9 apt to control the rotation of the frame 3 around an axis of the support post 4 and a second actuator 11 apt to control the rotation of the frame around an axis 12 perpendicular to the axis 10 of the support post 4, that is to vary the tilting of the frame 3 with respect to the vertical or to the plane of the ground T.

The guide member 2 comprises a beam 15 (for example of truss type) rotatably connected to the support post 4 and equipped with slots 16 for hinging the frame 3.

The slots 16 are implemented at members which, when the plant is implemented, project from the beam upwards.

The guide member 2 comprises a housing 18 for containing the first and second actuator 9, 11.

As shown, the housing partially includes the support post 4 equipped with a first toothed profile 20 surrounding and integral with the support post 4; the first toothed profile 20 is connected to the first actuator 9 for example by means of a first chain drive.

Furthermore, the plant is also equipped with a second toothed profile 21 which is equipped with an end (in 22) constrained to the frame 3 and which has the other end inserted into the housing 18; the second toothed profile 21 is connected to the second actuator 11 for example by means of a second chain drive and it has at least a portion (the central portion) shaped like an arc of circle.

In a proper way, the plant comprises control means 25 (of microprocessor or PLC type) connected both to at least a first luminosity sensor 26 and to the first and second actuator 9, 11; the control means 25 is apt to control the first and second actuator 9, 11 depending upon the information detected by the first luminosity sensor 26 so as to keep the panels oriented towards the sun with an optimum orientation, for example perpendicular to the sunbeams. The first luminosity sensor 26 is then also called "radiation sensor" and preferably it is positioned onto a rod projecting from one of the edges of the frame 3. Obviously, the radiation sensor 26 can be placed in other positions, for example above the upper edge of the frame 3. Advantageously, the plant is equipped with a second, not shown, luminosity sensor, detecting the diffused environment luminosity and in particular the day/night variation.

Furthermore, the plant comprises a wind sensor 27 connected to the control means 25; the control means 25 is then apt to control the first and second actuator 9, 11 so that, when the wind speed exceeds a pre-fixed minimum limit, the frame 3 (and the panels it supports) is oriented so as to reduce the wind stress acting thereon and on the photovoltaic panels 4.

The operation of the plant according to the invention appears to be clear from what described and illustrated and, in particular, it is substantially the following.

During the normal operation the luminosity sensor 26 shows the direction therefrom the sunbeams come and the PLC control means controls the actuators 9, 11 so as to keep the larger surface of the frame and of the panels 4 supported thereby for example always perpendicular to this direction (that is to the direction of the sunbeams).

When the wind increases beyond a minimum value, the PLC control means controls the actuators so that they position the frame 3 and the panels 4 supported thereby in order to decrease and, preferably, reduce to a minimum the wind incidence thereon.

The area placed below the plant is free as the panels are advantageously placed at a sufficiently high height, for example about three, four, five or more metres from the ground when the frame 3 is substantially horizontal; this allows using such area for agriculture, breeding or other.

An exploitation for agriculture use of the land below the plant can take place with particular advantage as follows.

A plurality of plants 1 according to the invention is installed onto an agricultural land, for example arranged according to a grid with rectangular or squared meshes so as to form a plurality of rows.

The actuation of various frames 3 is controlled and coordinated by a suitable control system which arranges temporarily a certain number of frames 3 in horizontal position when an agricultural means - such as for example a tractor - has to drive therebelow so as to ease the passage thereof.

For example, it is possible arranging horizontally all or part of the frames 3 flanking the row which the agricultural means has to travel, whereas other frames are kept in the optimum position thereof with respect to the sun.

Alternatively, still for easing the passage of tractors or other vehicles or agricultural means, it is possible to arrange temporarily a certain number of frames 3 in a substantially vertical position and parallel to the direction therewith the vehicle travels near the plants themselves, so as to increase temporarily the width of the row travelled by the vehicle.

A transmitter can be mounted on board the vehicle communicating to the fixed control system of the photovoltaic plants 1 the necessary information, such as for example the position and the speed of the vehicle itself.

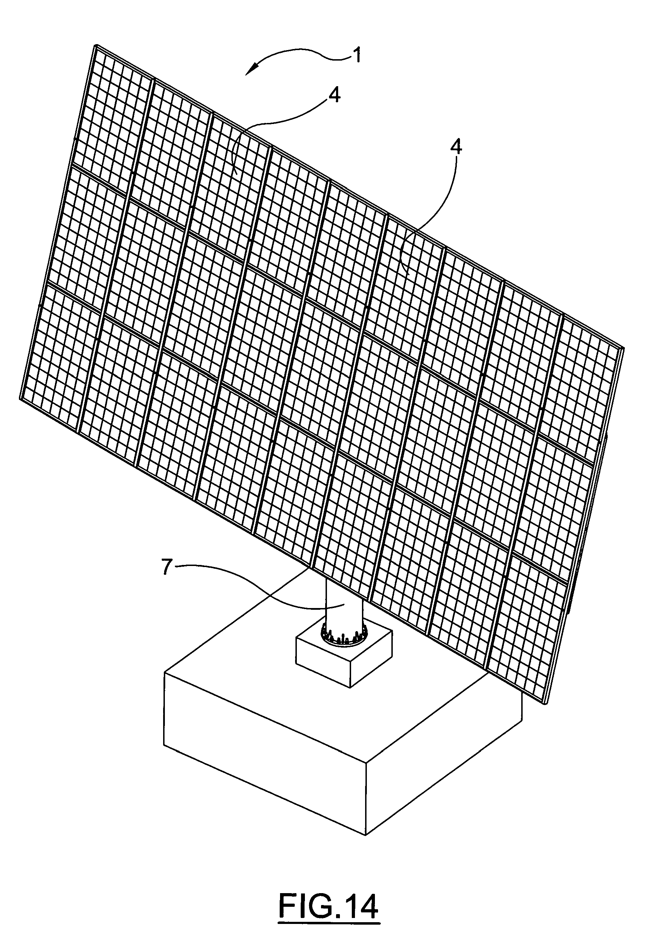

Figures 12 to 16 show a different embodiment example of the plant according to the invention having substantially the same features of the already described plant.

Practically, it has been noted that the plant according to the invention results to be particularly advantageous as it can be implemented in modular configuration; the system modularity allows increasing the power thereof in any moment simply by adding new modules.

Furthermore, the plant allows equi-distributable energy microproductions.

The PLC control means allows obtaining a higher performance with respect to the traditional plants as it manages the tilting and the rotation of the panels so as to maximize the efficiency thereof, thus consequently increasing the energy production.

Preferably, apart from the luminosity and wind sensor, the plant has an atmospherical plant allowing to measure constantly the radiation conditions, windiness, humidity and precipitations. This continuous monitoring, apart from providing statistical data, allows keeping the structure in constant safety.

Advantageously, the device has the electrical portion managed with low tension to keep people and fauna safety.

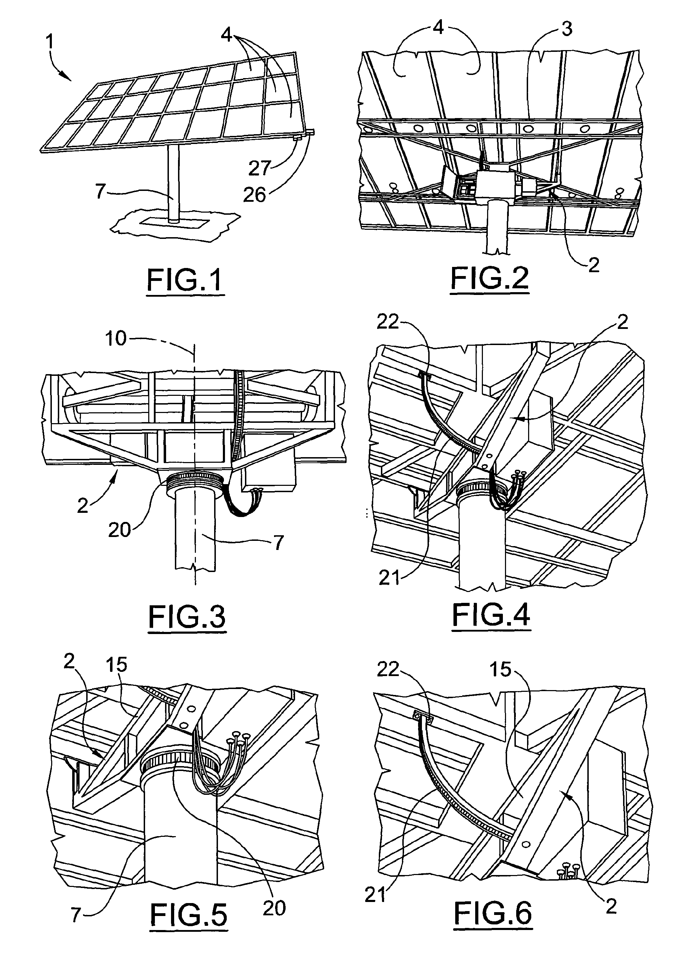

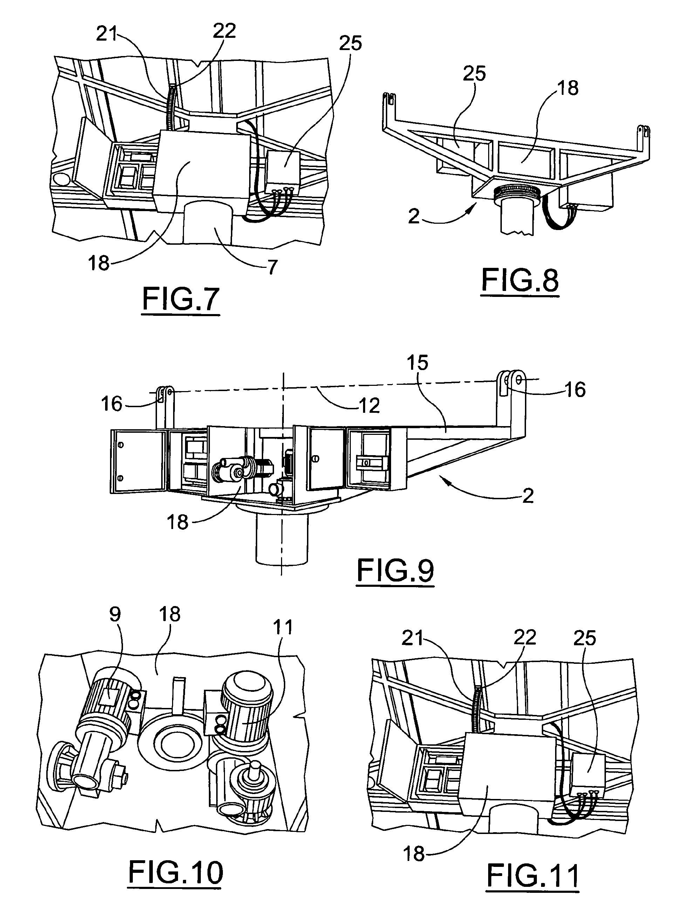

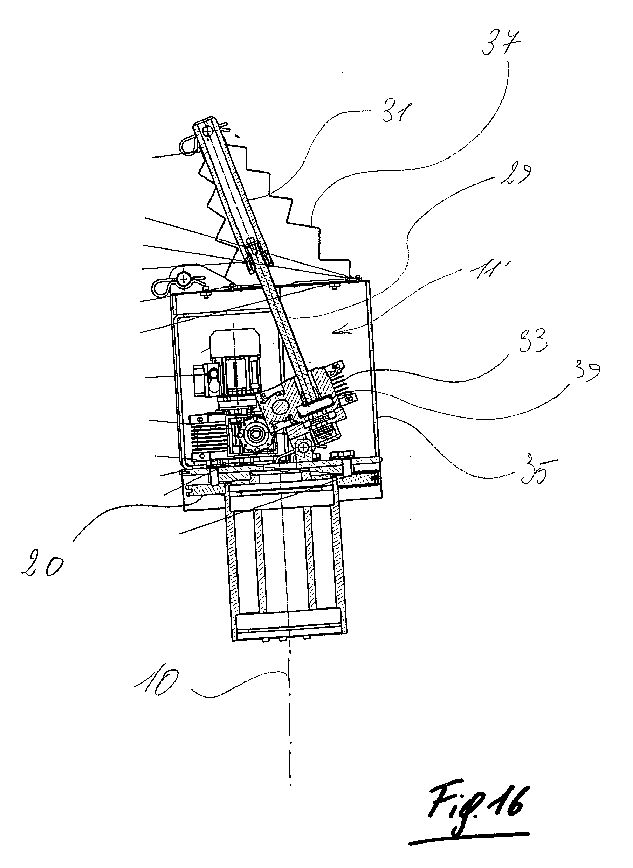

Going back to the description of the embodiment of figures 12 to 16, it is different from the embodiment of figures 1 to 11 among other things for the different actuator 11' adjusting the tilting of the frame 3 with respect the vertical or the ground: the actuator 11' is a jack actuator, including a drive stem 28 in turn composed by:
- a male threaded stem 29 having an outer thread; and
- a tubular stem 31 having a female thread on the inner side (figure 16).

The tubular stem 31 is hinged to the remaining part of the frame 3 so as not to rotate on itself; the threaded stem 29 is screwed into the tubular stem 31 and it can rotate on itself driven by the electric motor 33 by means, for example, of a toothed wheel 30 coaxial and integral to the stem 29. The release and the contraction of the jack actuator 11' takes place by screwing and unscrewing the threaded stem 29 in the stem 31; that is, the actuator 11' is a particular type of screw jack and it can adjust the tilting of the frame 3 with greater precision than, for example, the chain drive of the embodiment of figures 1 to 11; still with respect to this last embodiment, the jack actuator 11' in case of wind is able to lock the frame 3 more rigidly, by allowing it to swing much less. This greater rigidity and precision of the actuator 11' allows to position and keep the frame 3 with greater precision in the optimum position during the day, by increasing the whole performance of the plant.

The greater positioning precision and the less hysteresis of the jack actuator 11' allow to simplify the algorithms and the control circuits adjusting the tilting of the frame 3. Advantageously, the thread of the stems 29 and 31 implements an irreversible coupling, so as to lock the position of the frame 3 also when there are no safety breaks on the motor 33, or however with a relatively weak break. An additional advantage of the jack actuator 11' is to be able to move frames 3 with relatively big sizes, such as for example those illustrated previously, even if the actuator has relatively reduced sizes.

The electric motor 33 and the stems 29 and 31 are mounted so as to be able to swivel around a horizontal axis with respect to the crossbar 35 described hereinafter.

Also the plant of figures 12 to 16 is equipped with a first actuator 9' to make the frame 3 to rotate onto itself around the vertical axis 10.

The actuator 9' can be connected to and engage with the support post 7 by means of a chain transmission and a crown wheel analogous to the toothed profile 20 of figure 3. Alternatively, the actuator 9', as well as the actuator 9, can be connected to and engage with the support post 7 by means of other transmission systems, such as for example a pinion engaged directly with the first toothed sector 20 or other toothed wheel.

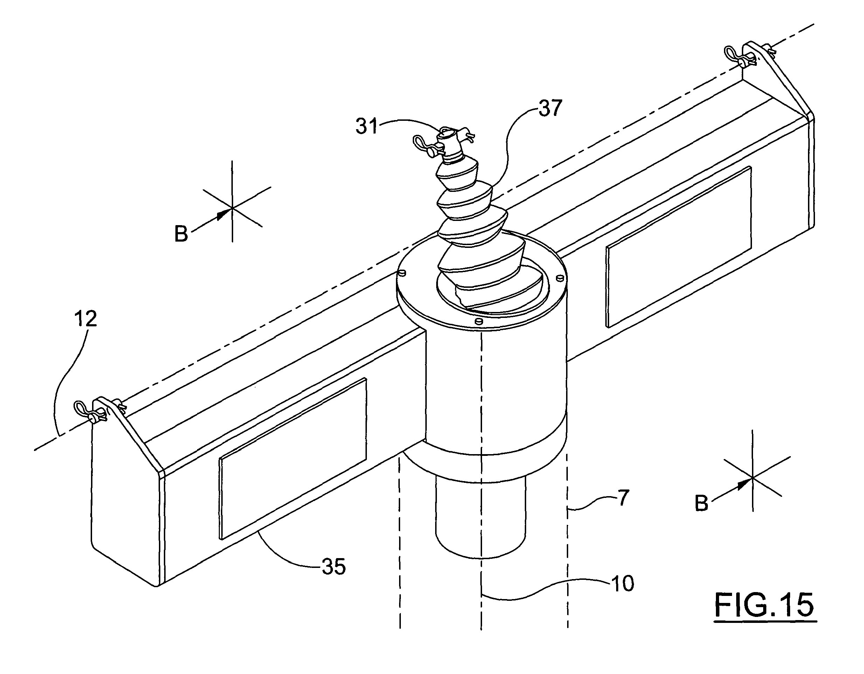

The frame 3 is hinged and sustained by a crossbar 35 substantially shaped like a parallelepiped (figure 15).

Advantageously, the crossbar 35 is wholly hollow and big enough to house inside thereof the actuators 9' and 11' and the possible signal and power cables, tubes of hydraulic and pneumatic systems, switchboards and microprocessor or PLC controllers, so as to protect them as much as possible from atmospherical agents and the outer environment in general.

This, apart from the fact that the crossbar 35 becomes a bearing shell and has a very simple outer shape, without projections, allows to simplify greatly the transportation and installation in situ of the photovoltaic plant.

The drive stem 28 goes partially out of the crossbar 35; the projecting portion thereof is housed inside a protection sleeve 37, for example a bellows sleeve (figure 15, 16).

The previously described embodiments can be subjected to different modifications and variations, still without departing from the protection scope of the present invention. For example, the crossbar 35 can have not only a substantially parallelepiped shape but also a cylindrical, prismatic, bent shape or even other shapes. The examples and lists of possible variants of the present application are to be meant as not exhaustive lists.

## Claims

1. A tracking photovoltaic plant comprising a guide member which supports a frame (3) thereto one or more photovoltaic panels are constrained, said guide member being apt to adjust the position of said panels in relation to the sun position, **characterized in that** it comprises a support which can be constrained to the ground which bears said frame spaced apart from the ground, so that during use the area placed below the frame is freely usable.

2. The plant according to the preceding claim, **characterized in that** said support is comprised by a support post.

3. The plant according to one or more of the preceding claims, **characterized in that** said guide member bears a first actuator apt to control the rotation of said frame around an axis of the support post and a second actuator apt to control the rotation of the frame around an axis perpendicular to the axis of the support post.

4. The plant according to one or more of the preceding claims, **characterized in that** said guide member comprises a beam rotatably connected to the support post and thereto the frame (3) is hinged.

5. The plant according to one or more of the preceding claims, **characterized in that** said guide member comprises a beam rotatably connected to the support post and equipped with slots for hinging said frame.

6. The plant according to one or more of the preceding claims**, characterized in that** said slots are implemented at the members which, when the plant is implemented, project from the beam upwards.

7. The plant according to one or more of the preceding claims, **characterized in that** said guide member comprises a housing containing said first and second actuator.

8. The plant according to one or more of the preceding claims, **characterized in that** said housing includes partially said support post which is equipped with a first toothed profile which surrounds and is integral to said support post, said first toothed profile being connected to said first actuator.

9. The plant according to one or more of the preceding claims, **characterized in that** it comprises a second toothed profile which is equipped with an end constrained to the frame and which has the other end inserted into the housing, said second toothed profile being connected to said second actuator.

10. The plant according to one or more of the preceding claims, **characterized in that** said second toothed profile has at least a portion shaped like an arc of circle.

11. The plant according to one or more of the preceding claims, **characterized in that** it comprises control means connected both at least to a luminosity sensor, and to the first and second actuator, said control means being apt to control the first and/or second actuator depending upon the information detected by the luminosity sensor so as to keep the panels oriented towards the sun.

12. The plant according to one or more of the preceding claims, **characterized in that** it comprises a wind sensor connected to said control means, said control means being apt to control said first and second actuator so that, when the wind speed exceeds a prefixed minimum limit, the frame is oriented so as to reduce the wind stress acting thereon and onto the photovoltaic panels.

13. The plant according to one or more of the preceding claims, **characterized in that** during the operation the point for hinging the frame (3) to the remaining portion of the plant (1) is arranged at a height (H) above the ground (T).

14. The plant according to one or more of the preceding claims, **characterized in that** it comprises control means arranged to control the first and/or second actuator so as to temporarily arrange the frame (3) with an orientation reducing the overall sizes of the plant in order to ease the passage of a predetermined vehicle near the plant itself, even if in case it does not optimize the momentary collection of solar energy.

15. The plant according to one or more of the preceding claims, **characterized in that** the second actuator (11') comprises a jack, in case a screw jack, a mechanical and/or hydraulic jack.
